# EUROPEAN PATENT APPLICATION

(11) **EP 4 838 835 A1**
(43) Date of publication of application: **11.11.2026**
(21) Application number: 26174030.2
(22) Date of filing: 22.04.2026
(51) Int. Cl.: H04L 9/40

(54) **SECURITY CONFIGURATION INTERCHANGE FOR OPERATIONAL TECHNOLOGY EQUIPMENT**

(30) Priority: 05.05.2025 US 202519198965
(71) Applicant: Schneider Electric Systems USA, Inc., Foxborough, MA 02035 (US)
(72) Inventor: REDMOND, James, Foxboro, 02035 (US); OZTURK, Metin, Foxboro, 02035 (US)
(74) Representative: Openshaw & Co.

(57) **Abstract**

A security configuration interchange for securing network access of operational technology (OT) devices is disclosed. A security artifact includes network configuration information for providing secure access to an OT device (102). The security artifact may be generated based on a previously configured OT device (102). A configuration processor retrieves the security artifact and applies settings based on network security information stored within the security artifact. The configuration process tests and validates the configuration of the OT device (102). The configuration processor presents a report of the configuration status for an operator to accept. Based on a rejection of the configuration, the configuration processor reverts to a previous security artifact. The configuration processor generates a security artifact based on current configuration. The generated security artifact may be signed by a certificate authority or otherwise encrypted for protection of network security information.

## Description

### BACKGROUND

Network security requirements are becoming an essential component of operation technology (OT) systems. Increasingly devices in industrial environments require access to secure networks for communication with other devices within the system and management tools. Further, as the devices include more connected features relying on network connectivity, the devices become more vulnerable to issues resulting from both misconfiguration and insecure access.

OT devices require configurations for both operations within the industrial system as well as for network security. Operational configuration requires expertise with the industrial automation system and the function of the OT device within in the system. Further, configuring the OT device for operation could require specific knowledge of software tools and standards that manage the industrial process. In contrast, configuration of network access requires specific IT knowledge. For example, to properly configure an OT devices network profile an expert must know what services must be enabled and their associated credentials. Securing network access for an OT device often requires configuration of a domain name system (DNS) server, a lightweight directory access protocol (LDAP), LDAP over Secure Sockets Layer (LDAPS), transport layer security (TLS), remote authentication dial-in user service (RADIUS), a certificate authority (CA) entity, network configurations such as credentials for various services, and role-based access control (RBAC) systems. For full configuration of a OT device, typically two experts, an operator of the industrial system and IT personnel, must perform operations on the device. This increases configuration time as well as the cost associated with configuration as each OT device. Further, OT devices may reside in industrial systems physically distant locations, such as at the site of an oil well, away from typical IT infrastructure managed by the IT personnel.

### SUMMARY

Aspects of the present disclosure provide a system for a security configuration interchange for OT equipment. A security artifact includes network security information required for deployment on an OT device. A configuration processor receives a security artifact and applies settings based on the information stored within the security artifact. Further, the configuration processor tests settings configured by the security artifact and presents a report indicating the status of the configuration. The configuration processor further generates a security artifact based on applied network security information for configuration of other devices within the industrial automation system.

In an aspect, a system for exchanging security configuration for operational technology equipment includes a transferable security artifact comprising a non-transitory computer readable medium storing network security configuration information and an operational technology (OT) device. The OT device includes a processor and a memory of the OT device coupled to the processor. When executed by the processor, computer-executable instructions stored in the memory configure the OT device for receiving the transferrable security artifact and extracting the network security configuration information from the security artifact. The executable instructions further configure the processor for automatically applying one or more network security settings based on the extracted network security configuration information and accessing a secure OT network based on the applied network security settings.

In another aspect, a method for exchanging security configuration for OT equipment includes receiving, from a software tool associated with a destination OT device, a device configuration and retrieving, by the destination OT device, a network security artifact. The method also includes applying the device configuration to the destination OT device, extracting network security information from the security artifact, and applying a network security configuration to the destination OT device based on the network security information. The method further includes validating, in response to the device configuration indicating validation of the network security configuration is required, the network security configuration, and reporting a validation status.

In yet another aspect, a system for exchanging security configuration for operational technology equipment includes a configuration processor and a configuration storage coupled to the configuration processor. The configuration storage includes one or more security artifacts. The system further includes a configuration memory coupled to the configuration processor. When executed by the configuration processor, computer-executable instructions stored in the memory cause the configuration processor to receive user credentials, log in on an OT device with the user credentials, and receive, from the OT device, privileged access to the OT device. The executable instructions further cause the configuration processor to receive a device configuration comprising one or more device operational settings, transmit, to the OT device, the device configuration to apply to the OT device, and retrieve a security artifact of the one or more security artifacts in the configuration storage. The executable instructions further cause the configuration processor to transmit, to the OT device, the security artifact to apply to the OT device as an OT device network configuration, receive, from the OT device, a configuration status of the OT device network configuration, and display, on a display coupled to the configuration device, the configuration status.

Other objects and features of the present invention will be in part apparent and in part pointed out herein.

### BRIEF DESCRIPTION OF THE DRAWINGS

FIG. 1 is a block diagram illustrating a system for a security information interchange for operational technology equipment, according to an embodiment.
FIG. 2 is a flow diagram illustrating an example process of applying a device configuration and a security artifact to an OT device, according to an embodiment.
FIG. 3 is a flow diagram illustrating an example process of testing a security artifact and its configuration on an OT device, according to an embodiment.
FIG. 4 is a flow diagram illustrating an example process of updating the network security configuration of an OT device, according to an embodiment.
FIG. 5 is a flow diagram illustrating an example process of accessing a security artifact, according to an embodiment.
FIG. 6 is a flow diagram illustrating an example process of exporting a security artifact from an OT device, according to an embodiment.

Corresponding reference characters indicate corresponding parts throughout the drawings.

### DETAILED DESCRIPTION

The features and other details of the concepts, systems, and techniques sought to be protected herein will now be more particularly described. It will be understood that any specific embodiments described herein are shown by way of illustration and not as limitations of the disclosure and the concepts described herein. Features of the subject matter described herein can be employed in various embodiments without departing from the scope of the concepts sought to be protected.

By simplifying configuration of OT devices, industrial automation system downtime, configuration time, and configuration costs can be reduced. In ordinary solutions, both IT personnel and an industrial system operator must perform operations to configure an OT device. However, previous configurations of OT devices provide a useful baseline for configuring similar devices or replacement devices. For example, when installing a secondary OT device replicating the function of another device, the first OT device can be leveraged for faster configuration. By generating a security artifact of the first OT device, a readily transferable configuration can be applied from one system to another. The security artifact includes the full set of network configuration settings to enable secure access to networked equipment both inside and outside the industrial automation facility. By utilizing a transferrable security artifact, an OT device can be configured for secure network access without requiring network security expertise locally as required in conventional configuration solutions.

Additionally, a transferable security artifact enables simplified quick updates to OT devices. Security protocols and policies continuously change and update due to new threats and technology. As a result, new applications and tools become an essential tool to maintain a secure network. Propagating these changes to all devices within an industrial automation system can be costly and time consuming. In some industrial systems, equipment may be used in remote environments such as oil wells, pipelines, water lift stations, or waste water treatment plants. Thus, ordinarily, to configure network security updates, either an operator with expertise in networking needs to make the updates, or IT personnel must travel to the site to make changes. By updating an OT device using a security artifact, the OT device can be configured by an operator without IT and/or networking expertise. Using the security artifact minimizes downtime because all required settings are applied without manual configuration and modification. Advantageously, due to replicating previous device settings, fewer configuration errors result from misapplied settings. Further, the operator can configure multiple devices based off the same security artifact ensuring reliable and consistent configuration. As a result, a security artifact supports a robust maintenance process for network security even for remote environments.

A security artifact includes all necessary information for configuring an OT device for secure network access. In some embodiments, the security artifact includes DNS information, LDAP information, certificate authority information, local user credential information, and network credential information. In one or more embodiments, the security artifact includes LDAPS information, TLS information, and RADIUS information. Additionally, the local user credential information and network credential information includes account role information for RBAC systems. In one or more embodiments, the security artifact also includes information about accessing remote network management applications and required credentials. In another embodiment, the security artifact further includes metadata about the generation of the artifact, such as version information, originating device information, or date of generation.

The security artifact acts as a transferable mechanism for network configuration information, a person having skill in the art will recognize the security artifact may take various formats. For example, the security artifact could be a text file, a JavaScript Object Notation (JSON) file, extensible markup language (XML) file, sound file, image file, or QR code. In some embodiments, because the security artifact includes sensitive network information, the security artifact is encrypted, in part or in whole, to protect the network configuration information. In one or embodiments, the security artifact is generalized for network security requirements and device agnostic. By using a generalized security artifact, network security configuration information can be more readily propagated to equipment within the industrial automation system. In other embodiments, the security artifact contains configuration settings specific for a specific device or role within the industrial automation system, such as management equipment versus process execution equipment. By using a device or role specific security artifact, configuration of OT devices is tailored to the specific needs of the OT device. As a result, the security artifact includes only necessary configuration information rather than settings that may not be required in all situations. In an embodiment, the security artifact comprises network security configuration information and the network security configuration information comprises at least one of user account information, DNS information, LDAP information, certificate authority information, or role-based authentication information.

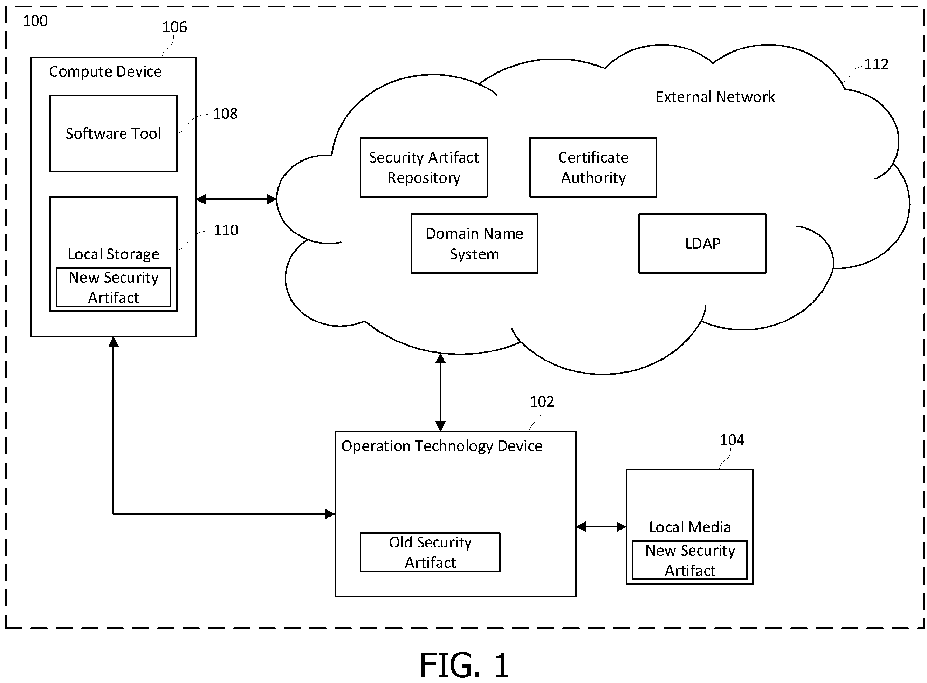

Referring to the figures and description below, a system 100 for exchanging security information for configuration of an OT device in an industrial automation system is disclosed. FIG. 1 is a block diagram illustrating the system 100. The industrial automation system includes an OT device 102. The OT device 102 may include a programmable automation controller (PAC), a remote terminal unit (RTU), a programmable logic controller (PLC), an intelligent electronic device (IED) or another device for use in an industrial automation and control system (IACS), a distributed control system (DCS), a supervisory control and data acquisition (SCADA) system, or the like. Additionally, the OT device 102 can include industrial equipment for performing the industrial process such as sensors, robotics, or other machinery of the industrial process. In some embodiments, the industrial automation device 102 connects to a local network through a wired connection or a wireless connection such as Wi-Fi or Bluetooth. In other embodiments, the industrial automation device 102 connects to a global network using a wired connection or Wi-Fi.

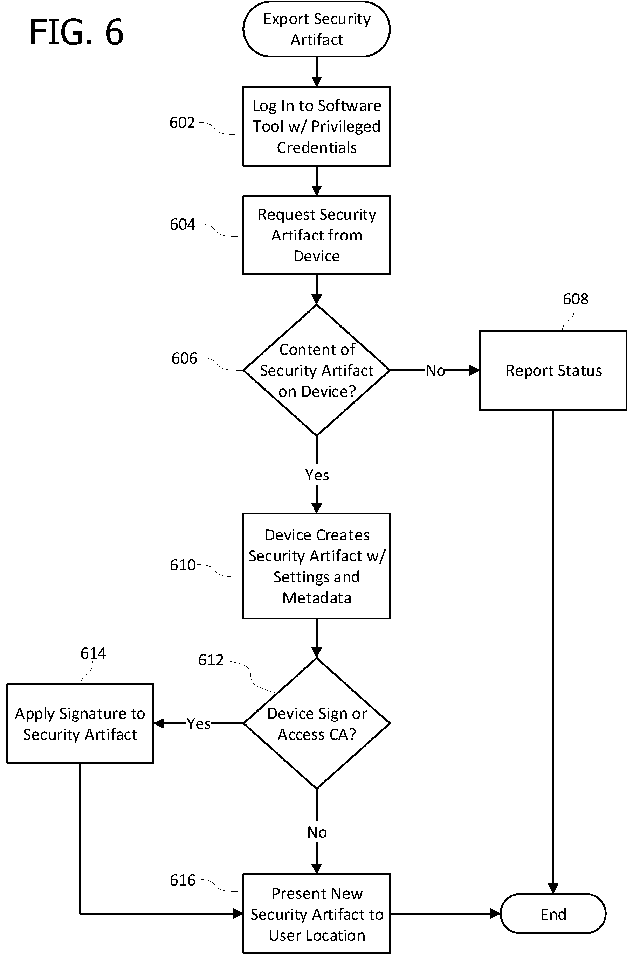

In some embodiments, the OT device 102 couples to local media 104. Local media 104 stores a new security artifact for installing on the OT device. In one or more embodiments, the local media 104 is a removable device such as a flash card or universal serial bus (USB) thumb drive. By using removable local media 104, a user can easily install new security artifacts without requiring network access. Further, a user can retrieve a security artifact from another device within the industrial automation system by connecting the local media 104 and exporting a security artifact, described further below, see FIG. 6.

Still referring to FIG. 1, the system 100 also includes a computing device 106. The computing device 106 manages configuration of the OT device 102 and optionally other OT devices in the industrial automation system. In some embodiments, the computing device 106 is configured to operate as a processor of the OT device 102. In other embodiments, the computing device 106 is a management device of the industrial automation system coupled to the OT device 102 through a local network. In one or more embodiments, the computing device 106 couples with input and output devices such as keyboard, mouse, microphones, and displays. The computing device 106 operates a software tool 108 for receiving input and performing operations. In one or more embodiments, the software tool 108 includes a command line interface (CLI), shell, and/or a software application. When the computing device 106 resides on the OT device 102, the software tool 108 may be executed by the OT device 102. The computing device 106 further includes a local storage 110. The local storage 110 stores data of the computing device 106 including new security artifacts for configuring the OT device 102. The local storage 110 may be any form of storage media including, but not limited to, a hard disk drive, solid state drive, a flash card, or thumb drive.

Continuing with FIG. 1, the system 100 further includes an external network 112. Both the OT device 102 and the computing device 106 connect to the external network 112. The external network 112 may include infrastructure for network access, configuration, data storage, and other remote software tools. In one or more embodiments, the external network 112 includes a security artifact repository, a domain name system, certificate authority service, and/or a lightweight directory access protocol (LDAP) server. In yet other embodiments, the external network 112 includes other software tools such as RemoteConnect, Roclink, or other configuration software. In one or more embodiments, the external network 112 includes cloud services used in management or operation of the OT device 102.

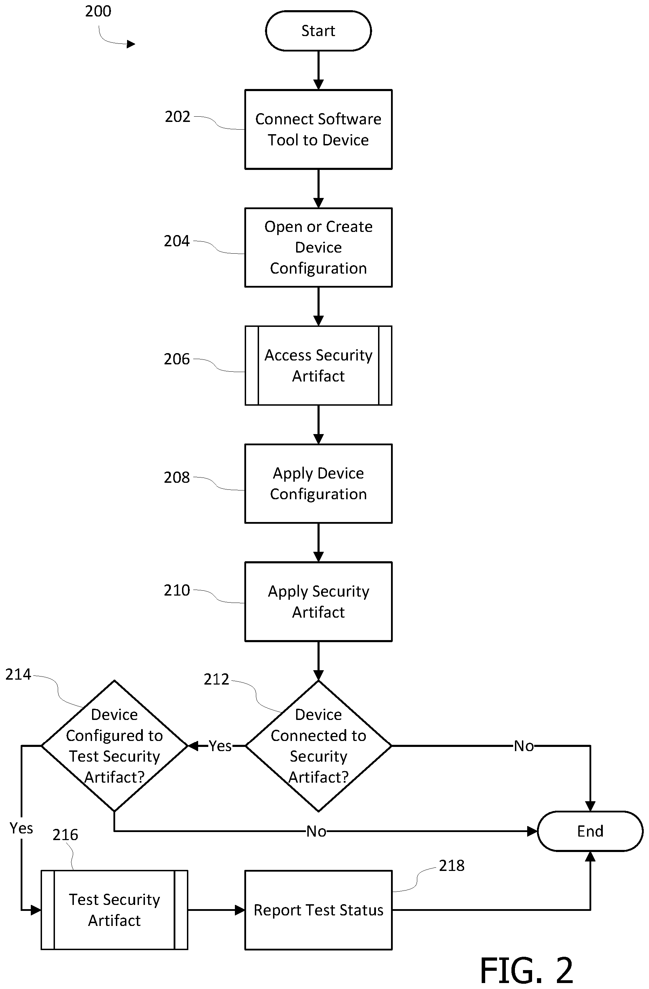

FIG. 2 is a flow diagram illustrating a configuration process 200 for configuring the OT device 102 with a security artifact, according to an embodiment. The process starts with connecting the software tool 108 to the OT device 102 at step 202. In some embodiments, the software tool 108 operates on the computing device 106 coupled to the OT device 102. Thus, the software tool 108 may connect over a network to the computing device 106. As mentioned, in other embodiments, the computing device 106 may reside on the OT device 102 and therefore, accesses the OT device 102 directly without connecting over a network. In one embodiment, connecting the software tool 108 to the OT device 102 requires inputting credentials associated with an access level allowing configuration of the device. Next, a user of the software tool 108 opens or creates a device configuration at step 204. The device configuration includes settings associated with operation of the OT device 102. For example, the device configuration may include parameters and functional programming for operating the device within the industrial automation process.

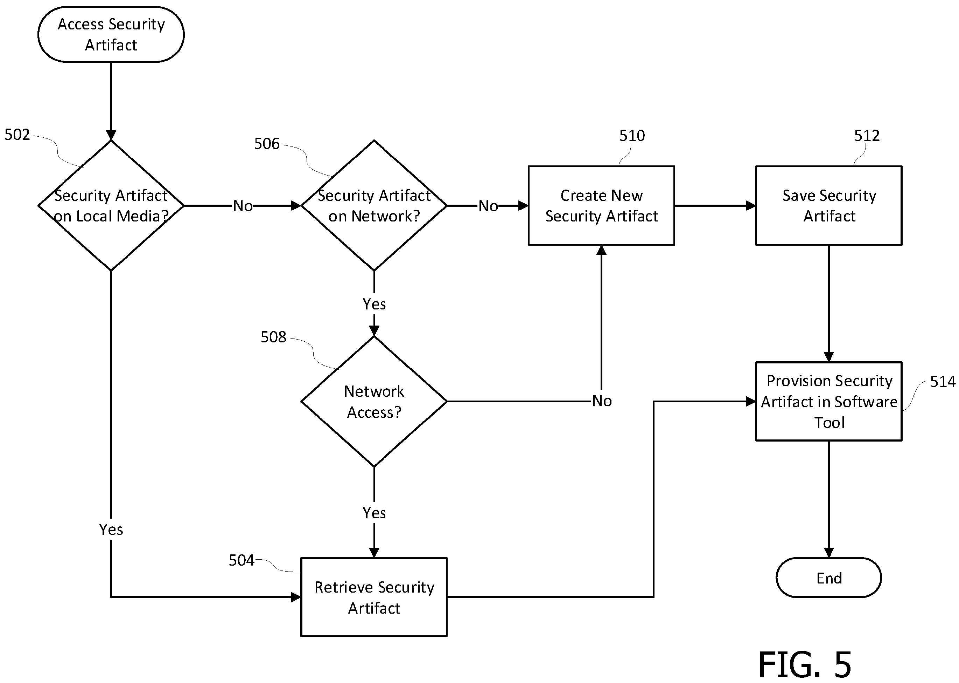

Still referring to the configuration process 200, the computing device 106 and/or the OT device 102 access the security artifact at step 206. The process for accessing the security artifact is described further herein, see FIG. 5. Accessing the security artifact may occur locally on the computing device 106 or over a network to the external network 112. In embodiments where the computing device 106 resides external to the OT device 102, the computing device 106 may also facilitate transferring the security artifact to the OT device 102. After accessing the security artifact, the computing device 106 applies the device configuration to the OT device 102 at step 208. Applying the device configuration includes configuring all settings for operation of the OT device 102 within the industrial automation system. In some embodiments, applying the device configuration includes further testing and validation of the OT device 102 based upon the applied settings.

The computing device 106 applies the security artifact to the OT device 102 at step 210 of the configuration process 200. Applying the security artifact includes applying all necessary network settings to ensure secure access to the network 112 and its services. In some embodiments, applying the necessary network settings includes configuring IP addresses for a DNS server, a certificate authority server, and LDAP server. Further, in one or more embodiments, configuring network settings may include storing credentials or connection settings for accessing remote management tools. In yet another embodiment, applying the security artifact includes configuring RBAC on the OT device 102 to create accounts to access the OT device 102 along with appropriate permission levels for access to the device 102. While applying the device configuration, step 208, and applying the security artifact, step 210, are described sequentially, applying these configurations can take place in any order or even simultaneously. For example, configuring the OT device 102 for operation may require network access, and therefore, the security artifact must be applied to the OT device 102 first.

The configuration process 200 continues at step 212 with the computing device 106 determining whether the OT device 102 successfully connected to the security artifact. In some embodiments, determining whether the OT device 102 connected to the security artifact involves determining whether the OT device 102 received the artifact; for example, identifying whether the new security artifact stored in local media 104 or local storage 110, and/or whether settings were applied. If the OT device 102 did not receive the security artifact, or failed to connect to the artifact and apply settings, the process ends. In some embodiments, the computing device 106 and/or the OT device 102 may report an error resulting from applying the security artifact. Then at step 214, if the OT device 102 is connected to the security artifact, the computing device 106 evaluates whether the OT device 102 is configured to test the artifact. If the OT device 102 is not configured to test the security artifact, the process of applying the security artifact ends. If the OT device 102 is configured to test the artifact, the process continues to testing the artifact at step 216.

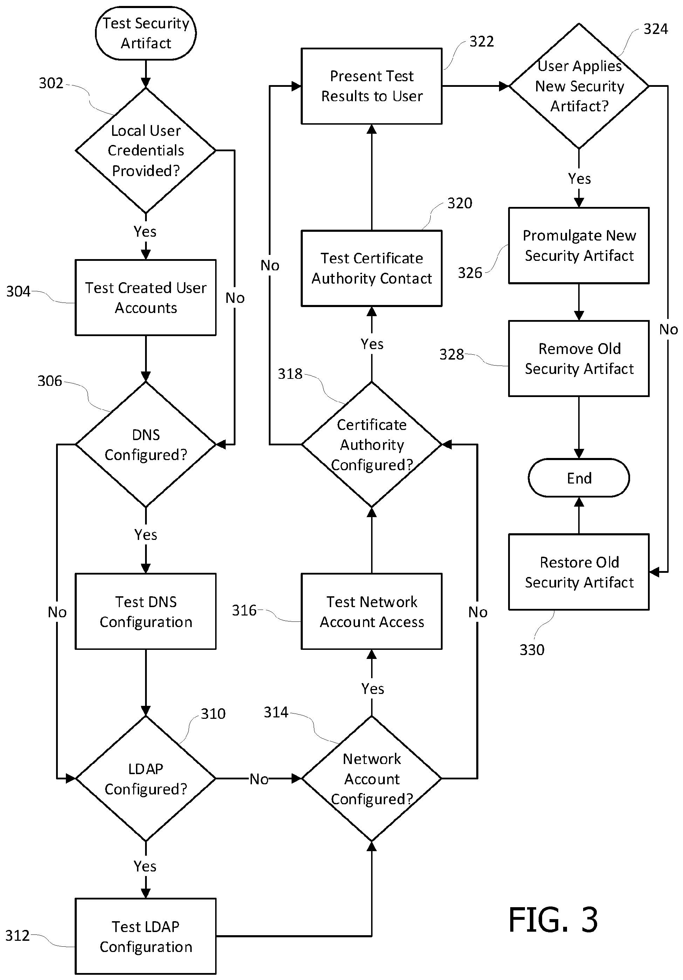

At step 216, configuration process 200 continues with testing the security artifact. Testing the security artifact includes validating that all settings were applied correctly. Further, testing ensures that the OT device 102 has secure access to the external network 112 and the various services of the network. The process of testing the security artifact is further described below, see FIG. 3. After completing the test of the security artifact, the computing device 106 reports and presents the results of the test at step 218 before ending the process of applying a security artifact. In some embodiments, the test status includes details about each individual configuration and whether a security setting was applied in accordance with the security artifact. Further, the test status may include information about whether the OT device 102 also can connect to services of the external network 112 and any potential issues. For example, the report can inform a user that the settings for connecting to the DNS were applied correctly, but the DNS server did not respond to a test request. Alternatively, or additionally, the report may identify whether credentials associated with a remote service successfully granted access to the OT device 102. The test status report enables a user to identify issues with the configuration of the OT device 102, issues with the security artifact, and/or other network issues such as improperly configured network equipment for accessing the external network 112. Thus after receiving the report, a user can take action to either update the security artifact, reapply the artifact, or remedy other network security issues.

Using the configuration process 200, an operator quickly can apply network security settings without complete networking expertise in remote environments. For example, an operator may use a USB thumb drive storing a security artifact to configure an OT. The security artifact may be retrieved from a previously configured OT device 102 or created by IT networking personnel. Thus, an operator can connect the thumb drive to a OT device 102 at an oil well without requiring IT personnel to visit the site or without network expertise. Further, by utilizing the testing process, described below, the operator can validate configuration of the OT device 102 ensuring secure network access. In combination, an operator with limited networking experience can both configure and validate network security quickly and even utilize the same configuration to update other devices within the industrial automation system.

FIG. 3 is a flow diagram illustrating an example process for testing the security artifact. Testing the security artifact involves validating the security settings applied to the OT device 102 after applying a security artifact. The process begins at step 302 with identifying whether the security artifact included local user credentials. If the security artifact included local user credentials, the process continues to step 304. If the security artifact did not include local user credentials, the process continues at step 306. At step 304, the OT device 102 tests whether the accounts associated with the user credentials were created. The OT device 102 validates that the accounts exist on the OT device 102 and that the credentials allow access. In some embodiments, if the local credentials include RBAC configuration, the OT device 102 validates that each created user account also has the appropriate role. Further, the OT device 102 may verify that each role associated with a user account is correctly associated with the proper permissions. For example, validating a user includes ensuring that the user name and password successfully access the system, then in a system with RBAC enabled, ensuring that the role associated with the account matches the security artifact. Then the user credentials may be validated to ensure that an account that has limited permissions if associated with a limited role. For example, ensuring that an operator of the industrial automation system is restricted from making changes to network security settings. Alternatively, a user associated with administrative privileges may be validated to ensure that the user credentials have access to all software and configuration settings.

After determining local credentials were not provided or testing provided user credentials, the process continues with identifying whether the security artifact included a DNS configuration at step 306 of FIG. 3. If the security artifact includes a DNS configuration, the process continues to test the DNS configuration of the security artifact at step 308. If the security artifact fails to include a DNS configuration, the process continues to step 310. At step 308, testing the DNS configuration involves validating that the OT device 102 has a DNS server configured and testing a request against the DNS server. In some embodiments, testing the DNS server includes transmitting a test request to a known domain name that the DNS is expected to resolve to specific IP address. With proper configuration, the OT device 102 correctly transmits the request to the DNS and receives a response indicating that the request resolves to the proper IP address associated with the domain name.

Still referring to FIG. 3, the testing the security artifact proceeds with identifying whether the security artifact includes an LDAP configuration at step 310. If the security artifact includes an LDAP configuration, the process continues to test the LDAP configuration of the security artifact at step 312. If the security artifact fails to include an LDAP configuration, the process continues to step 314. At step 312, testing the LDAP configuration involves validating access to the LDAP server. In some embodiments, testing the LDAP configuration includes starting a test LDAP session, validating access to contents of the directory service, validating a directory map, and/or testing an LDAP search. By testing both a connection to the LDAP server and access within the LDAP server, the process ensures the OT device 102 both can access the server and resolve requests.

The process of testing the security artifact continues with identifying whether the security artifact includes network accounts associated with network services at step 314 of FIG. 3. If the security artifact includes network account information, the process continues to test the network accounts of the security artifact at step 316. If the security artifact fails to include network account information, the process continues to step 318. In one or more embodiments, testing network account information includes validating access both to the network or service associated with the account and validating that the credentials grant access to the network or service. In some embodiments, testing the network account information may further include validating that the account permissions match expected settings. For example, if the network account credentials are assigned based on device function, validating proper permissions may be necessary for a newly configured device.

Continuing with FIG. 3, the testing process continues with identifying whether the security artifact includes certificate authority configuration at step 318. If the security artifact includes certificate authority information, the process continues to test certificate authority configuration of the security artifact at step 320. If the security artifact fails to include certificate authority information, the process continues to step 322. The certificate authority configuration is tested at step 320. The certificate authority configuration is tested by validating that the certificate authority responds to requests from the OT device 102 to sign certificates. In some embodiments, this test includes sending a request for the certificate authority to sign and/or issue a certificate associated with the OT device 102.

In some embodiments, the testing process continues with testing other network security configuration settings and services. While the security artifact testing process describes specific services and network configurations for testing, the testing process may be applied to any additional configuration settings associated with network security. For example, configuration and testing may include a firewall system or other security systems configured on the OT device 102. Further, while the process describes an order to the testing process a person having skill in the art will recognize that the testing process may occur in any order.

After testing the various components of the security artifact, the results of the tests are presented to the user at step 322 of FIG. 3. As previously described, presenting the security artifact test result enables a user to evaluate the configuration. In some embodiments the report may consist of a text summary of the test results for each component. After reviewing the security artifact test result, the user determines whether to apply the new security artifact to the OT device 102 at step 324. If the user decides to apply the security artifact to the OT device 102, the process continues to step 326. If the user decides to reject the application of the security artifact the process continues to step 330. At step 326, the OT device 102 promulgates the security artifact. In some embodiments, the security artifact is stored on the OT device 102 and replaces the old security artifact 104 stored on the device. Further, the security artifact may be transmitted to the external network 112 for storage in the storage artifact repository. After promulgating the security artifact, the OT device 102 removes the old security artifact at step 328 before terminating the process.

Alternatively, if a user declines to apply the security artifact, the old security artifact is restored at step 330 of FIG. 3. After receiving a rejection of the new security artifact, the OT device 102 restores the old security artifact by re-applying settings of the security artifact. In some embodiments, the OT device 102 tests the re-applied old security artifact to validate any issues. In other embodiments, the OT device 102 re-applies the old security artifact without testing.

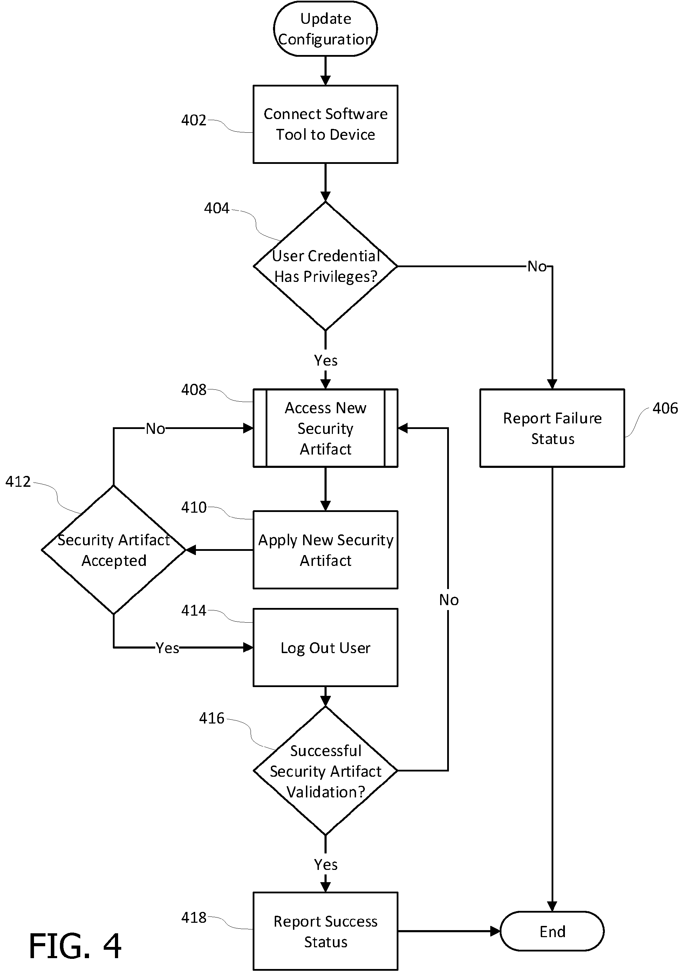

FIG. 4 is a flow diagram illustrating the process of updating the configuration of the OT device 102, according to an embodiment. The process starts with connecting the software tool 108 to the OT device 102 at step 402. As previously described, the software tool 108 operates on the computing device 106 which may be coupled to the OT device 102 or operate on the OT device 102 itself. To connect the software tool 108, the computing device 106 requires the user to enter credentials associated with the OT device 102. At step 404, the computing device 106 and/or the OT device 102 evaluate the credentials to determine whether the user has privileges to modify the network configuration of the OT device 102. In a system with RBAC, each user has an associated role that grants permissions for various level of access within the OT device 102. As a result, authenticating credentials also requires ensuring the user may access and modify the settings configured by the security artifact. If the user credentials are invalid or fail to have sufficient privileges, the computing device 106 reports a failure and terminates the process at step 406.

Still referring to FIG. 4, if the user credentials grant sufficient access, the process continues by accessing the security artifact at step 408. The security artifact may be accessed either locally on the OT device 102, the computing device 106, or over the network 112. The process of accessing the security artifact is further described below, see FIG. 5. After accessing the artifact, the new security artifact is applied to the OT device 102 at step 410. Applying the security artifact follows the process as described above and in some embodiments, also includes testing the configuration of the artifact. After applying and, optionally, testing the security artifact, the computing device 106 presents a status or report of the security artifact for at step 412. If the new security artifact was not accepted or otherwise not applied, the process returns to access the new security artifact again at step 408. If the artifact was applied and accepted, the process continues with logging out the user at step 414.

After logging the user out, the OT device 102 validates the security artifact at step 416 of FIG. 4. As previously mentioned, applying the security artifact may include testing the security artifact, which includes a status or report for the security artifact. Alternatively, the security artifact may be tested after the user has been logged to enable validation of user credential changes included in the security artifact. If the report or status of the security artifact indicate that the OT device 102 was not properly configured, the process returns to access the security artifact again at step 408. Otherwise, if the security artifact is validated with proper configuration settings, the computing device 106 reports a success status at 418 and ends the process.

FIG. 5 is a flow diagram illustrating a process of accessing a security artifact according to an embodiment. At step 502, the computing device 106 determines whether a new security artifact to be applied resides on local media 104 of the OT device 102 or the local storage 110 of the computing device 106. If the local media 104 or the local storage 110 store the new security artifact, the OT device 102 retrieves the new security artifact at step 504. At step 506, if the local media 104 or the local storage 110 do not store the new security artifact, the computing device 106 determines whether the security artifact is stored on the external network 112. If the artifact is stored on the network 112, the computing device 106 determines whether the security artifact can be accessed from the network 112 at step 508. If the computing device 106 can access the security artifact it is retrieved from the network at step 504. If the security artifact is not stored on then network 112 or the computing device 106 cannot access the security artifact over the network 112, the computing device 106 creates a new security artifact at step 510.

At step 510 of FIG. 5, the computing device 106 creates a new security artifact. In some embodiments, creating a new security artifact includes requesting network security configuration information from another device within the industrial automation system. In another embodiment, the computing device 106 requests network security configuration information from a device over the external network 112. By generating a security artifact from another device within the industrial automation system, a newly installed or to be reconfigured OT device 102 receives settings as applied and working within the industrial automation system.

After creation of the new security artifact, the computing device 106 saves the security artifact at step 512 of FIG. 5. In some embodiments, the computing device 106 saves the security artifact on local storage 110. Alternatively, the computing device 106 may save the security artifact to local media 104 of the OT device 102. Further, in one or more embodiments, the computing device 106 archives the security artifact by transferring the security artifact to the security artifact repository. Transferring the artifact may occur immediately after creation. Optionally, in the event of the computing device 106 lacking access to the external network 112 due to configuration, after applying the new security artifact the computing device 106 attempts to transmit the security artifact repository as shown in step 326 of FIG. 3. After retrieving or generating the security artifact, the computing device 106 provisions the security artifact within the software tool 108. By provisioning the artifact, the computing device 106 can utilize the security artifact to update the OT device 102 or other devices within the industrial automation system.

FIG. 6 is a flow diagram illustrating the process of exporting a security artifact from an OT device 102, according to an embodiment. First at step 602, a user logs into the software tool 108 of the computing device 106. In some embodiments, the login request must include credentials with sufficient privileges for accessing network security information. After logging in, a user submits a request for a security artifact at step 504. After receiving the request, the OT device 102 determines whether the device 102 is configured sufficiently to generate a security artifact conforming with the standards required. In some embodiments, the software tool 108 includes a configuration of required settings for the generation of a security artifact. In one or more embodiments, the required settings may be entered by a user of the computing device 106 or alternatively, set by a network security management application operating in the industrial automation system or external network 112. If the OT device 102 does not have sufficient configuration settings to generate a security artifact, the software tool 108 reports an error status and terminates the export process at step 608.

If the OT device 102 has sufficient configuration information for generating a security artifact, the OT device 102 creates a security artifact based on its applied network security configuration at step 610 of FIG. 6. The OT device 102 compiles the network security configuration information applied to the device in a format conforming with the requirements of a security artifact. In some embodiments, the security artifact includes metadata such as information about the device generating the artifact and when the artifact was generated. In some embodiments, the security artifact is encrypted after generation to protect network security information. After generating the security artifact, at step 612, the OT device 102 determines whether the artifact can or needs to be signed either by the OT device 102 or by a certificate authority residing in the external network 112. If the security artifact requires a signature, the OT device 102 self signs the certificate or transmits the certificate to the certificate authority server for signing at step 614. After signing or if the security artifact does not require signing, the OT device 102 transmits the artifact to a user location at step 616. In some embodiments, the user location may be a location in the local storage 110 of the computing device 106 or in the local media 104 of the OT device 102. In other embodiments, the user location may be the security artifact repository located in the external network 112. In the event the security artifact is encrypted, the process would include authentication and decryption of the security artifact before extracting the network security information.

Embodiments of the present disclosure may comprise a special purpose computer including a variety of computer hardware, as described in greater detail herein.

For purposes of illustration, programs and other executable program components may be shown as discrete blocks. It is recognized, however, that such programs and components reside at various times in different storage components of a computing device, and are executed by a data processor(s) of the device.

Although described in connection with an example computing system environment, embodiments of the aspects of the invention are operational with other special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, industrial human machine interfaces (HMI), distributed computing environments that include any of the above systems or devices, and the like.

Embodiments of the aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the invention.

Embodiments may be implemented with processor-executable instructions. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the invention.

When introducing elements of the invention or embodiments thereof, the articles "a," "an," "the," and "said" are intended to mean that there are one or more of the elements. The terms "comprising," "including," and "having" are intended to be inclusive and mean that there may be additional elements other than the listed elements.

Not all of the depicted components illustrated or described may be required. In addition, some implementations and embodiments may include additional components. Variations in the arrangement and type of the components may be made without departing from the scope of the claims as set forth herein. Additional, different or fewer components may be provided and components may be combined. Alternatively, or in addition, a component may be implemented by several components.

The above description illustrates embodiments by way of example and not by way of limitation. This description enables one skilled in the art to make and use aspects of the invention, and describes several embodiments, adaptations, variations, alternatives and uses of the aspects of the invention, including what is presently believed to be the best mode of carrying out the aspects of the invention. Additionally, it is to be understood that the aspects of the invention are not limited in its application to the details of construction and the arrangement of components set forth in the following description or illustrated in the drawings. The aspects of the invention are capable of other embodiments and of being practiced or carried out in various ways. Also, it will be understood that the phraseology and terminology used herein is for the purpose of description and should not be regarded as limiting.

It will be apparent that modifications and variations are possible without departing from the scope of the invention defined in the appended claims. As various changes could be made in the above constructions and methods without departing from the scope of the invention, it is intended that all matter contained in the above description and shown in the accompanying drawings shall be interpreted as illustrative and not in a limiting sense.

In view of the above, it will be seen that several advantages of the aspects of the invention are achieved and other advantageous results attained.

The Abstract and Summary are provided to help the reader quickly ascertain the nature of the technical disclosure. They are submitted with the understanding that they will not be used to interpret or limit the scope or meaning of the claims. The Summary is provided to introduce a selection of concepts in simplified form that are further described in the Detailed Description. The Summary is not intended to identify key features or essential features of the claimed subject matter, nor is it intended to be used as an aid in determining the claimed subject matter.
Further aspects of the invention are provided by the subject matter of the following clauses:
Clause 1. A system for exchanging security configuration for operational technology equipment, the system comprising: a transferable security artifact comprising a non-transitory computer readable medium storing network security configuration information; an operational technology (OT) device comprising: a processor; and a memory of the OT device coupled to the processor, the memory storing computer-executable instructions that, when executed by the processor, configure the OT device for: receiving the transferrable security artifact; extracting the network security configuration information from the security artifact; automatically applying one or more network security settings based on the extracted network security configuration information; and accessing a secure OT network based on the applied network security settings.
Clause 2. The system of Clause 1, wherein the memory of the OT device further stores computer-executable instructions that, when executed by the processor, configure the processor for: receiving, before extracting the network security information, one or more device configuration settings; and applying the device configuration settings.
Clause 3. The system of Clause 2, wherein the memory of the OT device further stores computer-executable instructions that, when executed by the processor, configure the OT device for: identifying a validation status based on the device configuration; identifying, in response to the validation status indicating required validation, one or more local user accounts, a domain name system (DNS) configuration, a lightweight directory access protocol (LDAP) configuration, a network user account, and a certificate authority configuration associated with the security artifact; testing the local user accounts on the target operational technology device to determine a user account status; sending a test DNS request to a DNS server associated with the DNS configuration to determine a DNS status; validating the LDAP configuration to determine an LDAP status; testing the network user accounts on a network coupled to the OT device to determine a network account status; sending a certificate test request to a certificate authority associated with the certificate authority configuration to generate a certificate authority status; displaying the user account status, the DNS status, the LDAP status, network account status, and the certificate authority status; receiving an input, the input indicating whether to accept the network security configuration of the target operational technology device; reverting, in response to the input indicating rejection of the network security configuration, the network security configuration; and promulgating, in response to the input indicating acceptance of the network security configuration, the security artifact to a security artifact management system.
Clause 4. The system of any of Clauses 1 to 3, wherein the network security configuration information comprises at least one of user account information, DNS information, LDAP information, certificate authority information, or role-based authentication information.
Clause 5. The system of any of Clauses 1 to 4, wherein the OT device further comprises a storage media coupled to the processor and wherein the memory of the OT device further stores computer-executable instructions that, when executed by the processor, configure the OT device for: determining, before retrieving the security artifact, whether the security artifact is stored within the storage media; accessing, in response to the security artifact being stored within the OT device storage, the security artifact from the OT device storage; identifying, in response to the security artifact not being stored within the OT device storage, whether the security artifact is stored on a network device; creating, in response to the security artifact not being stored on the network device, the security artifact; determining, in response to the security artifact being stored on the network device, a network access status of the OT device; accessing, in response to the network access status indicating network connectivity, the security artifact from the network device; and creating, in response to the network access status indicating no network connectivity, the security artifact.
Clause 6. The system of any of Clauses 1 to 5, further comprising: a software tool coupled to the OT device; and a memory of the software tool storing computer-executable instructions that, when executed by the processor, configure the OT device for: soliciting user credentials associated with the OT device through the software tool; requesting, from the OT device, a new security artifact associated with the network settings of the OT device; receiving, in response to the OT device being unable to provide the new security artifact, an error status; receiving, from at least one of the OT device or a certificate authority, a signed new security artifact in response to at least one of the OT device or certificate authority being able to sign the new security artifact; and receiving, from the OT device, an unsigned new security artifact in response to at least one of the OT device or certificate authority being unable to sign the new security artifact.
Clause 7. The system of any of Clauses 1 to 6, wherein the memory of the OT device further stores computer-executable instructions that, when executed by the processor, configure the OT device for: displaying, on a display coupled to the OT device, a validation test status; receiving an acceptance status; and reverting, in response to the acceptance status indicating rejection of the network security settings, the network security settings.
Clause 8. The system of any of Clauses 1 to 7, further comprising: a software tool coupled to the OT device; and a memory of the software tool storing computer-executable instructions that, when executed by the processor, configure the OT device for: receiving update security artifact request; soliciting user credentials through the software tool; logging in to the OT device using the user credentials; reporting, in response to a privilege level associated with the user credentials not meeting a required privilege level to update the security artifact, a configuration failure; retrieving, in response to the privilege level associated with the user credentials meeting the required privilege level update the security artifact, an updated security artifact based on the update security artifact request; applying the updated security artifact to the OT device; receiving, from the OT device, a status of the updated security artifact; returning, in response to the status indicating a rejection of the updated security artifact, to the retrieving the updated security artifact step; logging out of the OT device; determining a validation status based on validating the OT device with the updated security artifact; returning, in response to the validation indicating a configuration failure, to the retrieving the updated security artifact step; and reporting, in response to the validation indicating a configuration success, a success status.
Clause 9. The system of any of Clauses 1 to 8, wherein the transferable security artifact comprises at least one of a text file, a JSON file, an XML file, a sound file, an image file, or QR code.
Clause 10. The system of any of Clauses 1 to 9, wherein the network security information comprises encryption data of one or more network security settings and wherein the memory of the OT device further stores computer-executable instructions that, when executed by the processor, configure the processor for: decrypting, before extracting the network security information, the security artifact.
Clause 11. A method for exchanging security configuration for operational technology (OT) equipment, the method comprising: receiving, from a software tool associated with a destination OT device, a device configuration; retrieving, by the destination OT device, a network security artifact; applying the device configuration to the destination OT device; extracting network security information from the security artifact; applying a network security configuration to the destination OT device based on the network security information; validating, in response to the device configuration indicating validation of the network security configuration is required, the network security configuration; and reporting a validation status.
Clause 12. The method of Clause 11, wherein validating the network security configuration step further comprises: identifying one or more user accounts of the security artifact; testing the user accounts on the destination OT device to determine a user account status; identifying a DNS configuration of the security artifact; validating the DNS configuration against the destination OT device to determine a DNS status; identifying a LDAP configuration of the security artifact; validating the LDAP configuration against the destination OT device to determine an LDAP status; identifying a certificate authority configuration of the security artifact; validating the certificate authority configuration against the destination OT device to determine a certificate authority status; displaying the user account status, the DNS status, the LDAP status, and the certificate authority status; receiving an input, the input indicating whether to accept the network security configuration of the destination OT device; reverting, in response to the input indicating rejection of the network security configuration, the network security configuration; and promulgating, in response to the input indicating acceptance of the network security configuration, the security artifact to a security artifact management system.
Clause 13. The method of Clause 11 or Clause 12, wherein retrieving the security artifact step comprises: retrieving, in response to the security artifact being stored in a local storage of the destination OT device, the security artifact from the local storage; determining, in response to the security artifact not being stored in a local storage of the destination OT device, whether the security artifact is available and accessible over a network; retrieving, in response to the security artifact being available and accessible over the network, the security artifact over the network; creating, in response to the security artifact being unavailable or accessible over the network, the security artifact on a source OT device; and retrieving, from the source OT device, the security artifact.
Clause 14. The method of any of Clauses 11 to 13, further comprising: receiving, from a software tool, a login request; receiving, in response to the login request succeeding, a security artifact request; reporting, in response to the network security information being unavailable on the destination OT device, an error status; compiling the network security information associated with the destination OT device; generating a new security artifact based on the network security information; transmitting, to the software tool, the new security artifact.
Clause 15. The method of Clause 14, further comprising signing, before transmitting the new security artifact, the new security artifact by at least one of a certificate authority or the destination OT device.
Clause 16. A system for exchanging security configuration for operational technology equipment, the system comprising: a configuration processor; a configuration storage coupled to the configuration processor, the configuration storage comprising one or more security artifacts; and a configuration memory coupled to the configuration process, the configuration memory storing computer-executable instructions that, when executed, cause the configuration processor to: receive user credentials; log in on an operational technology (OT) device with the user credentials; receive, from the OT device, privileged access to the OT device; receive a device configuration comprising one or more device operational settings; transmit, to the OT device, the device configuration to apply to the OT device; retrieve a security artifact of the one or more security artifacts in the configuration storage; transmit, to the OT device, the security artifact to apply to the OT device as an OT device network configuration; receive, from the OT device, a configuration status of the OT device network configuration; display, on a display coupled to the configuration device, the configuration status.
Clause 17. The system of Clause 16, wherein the configuration memory further stores computer-executable instructions that, when executed, cause the configuration processor to: receive an acceptance status based on the configuration status; transmit, in response to the acceptance status indicating a rejection of the configuration status, a request to revert the OT device network configuration to the OT device; retrieve, in response to the acceptance status indicating an acceptance of the configuration status, a new security artifact based on the OT device network configuration from the OT device; and store the new security artifact in the configuration storage.
Clause 18. The system of Clause 16 or Clause 17, wherein the configuration memory further stores computer-executable instructions that, when executed, cause the configuration processor to: determine whether the security artifact resides in the configuration storage; retrieve, in response to the security artifact not residing in the configuration storage, the security artifact from a network device; and store, in the configuration storage, the security artifact.
Clause 19. The system of any of Clauses 16 to 18, wherein the configuration memory further stores computer-executable instructions that, when executed, cause the configuration processor to: update the OT device network configuration, wherein updating the OT device network configuration comprises: connecting to the OT device; receiving update user credentials having an access privilege; logging into the OT device using the update user credentials; retrieving, in response to the access privilege having permission to update the OT device, a new security artifact from the configuration storage; transmitting, to the OT device, the new security artifact; in response receiving, from the OT device, acceptance of the new security artifact, logging out of the OT device; and in response to receiving, from the OT device, a validation success, reporting the validation success.
Clause 20. The system of any of Clauses 16 to 19, wherein the configuration memory further stores computer-executable instructions that, when executed, cause the configuration processor to: connect to the OT device; receive, from the OT device, one or more network settings; generate a new security artifact based on the network settings; store the new security artifact in the configuration storage.

## Claims

1. A system (100) for exchanging security configuration for operational technology equipment, the system (100) comprising:
a transferable security artifact comprising a non-transitory computer readable medium storing network security configuration information; and
an operational technology, OT, device (102) comprising:
a processor; and
a memory coupled to the processor, the memory storing computer-executable instructions that, when executed by the processor, configure the OT device (102) for:
receiving the transferrable security artifact;
extracting the network security configuration information from the security artifact;
automatically applying one or more network security settings based on the extracted network security configuration information; and
accessing a secure OT network based on the applied network security settings.

2. The system (100) of claim 1, wherein the memory of the OT device (102) stores computer-executable instructions that, when executed by the processor, configure the processor for:
receiving, before extracting the network security information, one or more device configuration settings; and
applying the device configuration settings.

3. The system (100) of claim 2, wherein the memory of the OT device (102) stores computer-executable instructions that, when executed by the processor, configure the OT device (102) for:
identifying a validation status based on the device configuration;
identifying, in response to the validation status indicating required validation, one or more local user accounts, a domain name system, DNS, configuration, a lightweight directory access protocol, LDAP, configuration, a network user account, and a certificate authority configuration associated with the security artifact;
testing the local user accounts on the target operational technology device to determine a user account status;
sending a test DNS request to a DNS server associated with the DNS configuration to determine a DNS status;
validating the LDAP configuration to determine an LDAP status;
testing the network user accounts on a network coupled to the OT device (102) to determine a network account status;
sending a certificate test request to a certificate authority associated with the certificate authority configuration to generate a certificate authority status;
displaying the user account status, the DNS status, the LDAP status, network account status, and the certificate authority status;
receiving an input, the input indicating whether to accept the network security configuration of the target operational technology device;
reverting, in response to the input indicating rejection of the network security configuration, the network security configuration; and
promulgating, in response to the input indicating acceptance of the network security configuration, the security artifact to a security artifact management system.

4. The system (100) of any of claims 1 to 3, wherein the network security configuration information comprises at least one of user account information, DNS information, LDAP information, certificate authority information, or role-based authentication information.

5. The system (100) of any of claims 1 to 4, comprising a storage device (104) communicatively coupled to the processor of the OT device (102), wherein the memory of the OT device (102) stores computer-executable instructions that, when executed by the processor, configure the OT device (102) for:
determining, before retrieving the security artifact, whether the security artifact is stored within the storage device (104);
accessing, in response to the security artifact being stored within the storage device (104), the security artifact from the storage device (104);
identifying, in response to the security artifact not being stored within the storage device (104), whether the security artifact is stored on a network device;
creating, in response to the security artifact not being stored on the network device, the security artifact;
determining, in response to the security artifact being stored on the network device, a network access status of the OT device (102);
accessing, in response to the network access status indicating network connectivity, the security artifact from the network device; and
creating, in response to the network access status indicating no network connectivity, the security artifact.

6. The system (100) of any of claims 1 to 5, comprising:
a software tool (108) coupled to the OT device (102);
a memory of the software tool (108) storing computer-executable instructions that, when executed by the processor, configure the OT device (102) for:
soliciting user credentials associated with the OT device (102) through the software tool (108);
requesting, from the OT device (102), a new security artifact associated with the network settings of the OT device (102);
receiving, in response to the OT device (102) being unable to provide the new security artifact, an error status;
receiving, from at least one of the OT device (102) or a certificate authority, a signed new security artifact in response to at least one of the OT device (102) or certificate authority being able to sign the new security artifact; and
receiving, from the OT device (102), an unsigned new security artifact in response to at least one of the OT device (102) or certificate authority being unable to sign the new security artifact.

7. The system (100) of any of claims 1 to 6, wherein the memory of the OT device (102) stores computer-executable instructions that, when executed by the processor, configure the OT device (102) for:
displaying, on a display coupled to the OT device (102), a validation test status;
receiving an acceptance status; and
reverting, in response to the acceptance status indicating rejection of the network security settings, the network security settings.

8. The system (100) of any of claims 1 to 7, comprising:
a software tool (108) coupled to the OT device (102);
a memory of the software tool (108) storing computer-executable instructions that, when executed by the processor, configure the OT device (102) for:
receiving an update security artifact request;
soliciting user credentials through the software tool (108);
logging in to the OT device (102) using the user credentials;
reporting, in response to a privilege level associated with the user credentials not meeting a required privilege level to update the security artifact, a configuration failure;
retrieving, in response to the privilege level associated with the user credentials meeting the required privilege level update the security artifact, an updated security artifact based on the update security artifact request;
applying the updated security artifact to the OT device (102);
receiving, from the OT device (102), a status of the updated security artifact;
returning, in response to the status indicating a rejection of the updated security artifact, to the retrieving the updated security artifact step;
logging out of the OT device (102);
determining a validation status based on validating the OT device (102) with the updated security artifact;
returning, in response to the validation indicating a configuration failure, to the retrieving the updated security artifact step; and
reporting, in response to the validation indicating a configuration success, a success status.

9. The system (100) of any of claims 1 to 8, wherein the network security information comprises encryption data of one or more network security settings and wherein the memory of the OT device (102) stores computer-executable instructions that, when executed by the processor, configure the processor for:
decrypting, before extracting the network security information, the security artifact.

10. A method for exchanging security configuration for operational technology, OT, equipment, the method comprising:
receiving, from a software tool (108) associated with a destination OT device (102), a device configuration;
retrieving, by the destination OT device (102), a network security artifact;
applying the device configuration to the destination OT device (102);
extracting network security information from the security artifact;
applying a network security configuration to the destination OT device (102) based on the network security information;
validating, in response to the device configuration indicating validation of the network security configuration is required, the network security configuration; and
reporting a validation status.

11. The method of claim 10, wherein validating the network security configuration step comprises:
identifying one or more user accounts of the security artifact;
testing the user accounts on the destination OT device (102) to determine a user account status;
identifying a DNS configuration of the security artifact;
validating the DNS configuration against the destination OT device (102) to determine a DNS status;
identifying a LDAP configuration of the security artifact;
validating the LDAP configuration against the destination OT device (102) to determine an LDAP status;
identifying a certificate authority configuration of the security artifact;
validating the certificate authority configuration against the destination OT device (102) to determine a certificate authority status;
displaying the user account status, the DNS status, the LDAP status, and the certificate authority status;
receiving an input, the input indicating whether to accept the network security configuration of the destination OT device (102);
reverting, in response to the input indicating rejection of the network security configuration, the network security configuration; and
promulgating, in response to the input indicating acceptance of the network security configuration, the security artifact to a security artifact management system.

12. The method of claim 10 or claim 11, wherein retrieving the security artifact step comprises:
retrieving, in response to the security artifact being stored in a local storage of the destination OT device (102), the security artifact from the local storage;
determining, in response to the security artifact not being stored in a local storage of the destination OT device (102), whether the security artifact is available and accessible over a network;
retrieving, in response to the security artifact being available and accessible over the network, the security artifact over the network;
creating, in response to the security artifact being unavailable or accessible over the network, the security artifact on a source OT device (102); and
retrieving, from the source OT device (102), the security artifact.

13. The method of any of claims 10 to 12, comprising:
receiving, from a software tool (108), a login request;
receiving, in response to the login request succeeding, a security artifact request;
reporting, in response to the network security information being unavailable on the destination OT device (102), an error status;
compiling the network security information associated with the destination OT device (102);
generating a new security artifact based on the network security information;
transmitting, to the software tool (108), the new security artifact;
and optionally signing, before transmitting the new security artifact, the new security artifact by at least one of a certificate authority or the destination OT device (102).

14. A system for exchanging security configuration for operational technology equipment, the system comprising:
a configuration processor;
a configuration storage coupled to the configuration processor, the configuration storage comprising one or more security artifacts; and
a configuration memory coupled to the configuration process, the configuration memory storing computer-executable instructions that, when executed, cause the configuration processor to:
receive user credentials;
log in on an operational technology, OT, device (102) with the user credentials;
receive, from the OT device (102), privileged access to the OT device (102);
receive a device configuration comprising one or more device operational settings;
transmit, to the OT device (102), the device configuration to apply to the OT device (102);
retrieve a security artifact of the one or more security artifacts in the configuration storage;
transmit, to the OT device (102), the security artifact to apply to the OT device (102) as an OT device network configuration;
receive, from the OT device (102), a configuration status of the OT device network configuration;
display, on a display coupled to the configuration device, the configuration status.

15. The system of claim 14, wherein the configuration memory stores computer-executable instructions that, when executed, cause the configuration processor to:
receive an acceptance status based on the configuration status;
transmit, in response to the acceptance status indicating a rejection of the configuration status, a request to revert the OT device network configuration to the OT device (102);
retrieve, in response to the acceptance status indicating an acceptance of the configuration status, a new security artifact based on the OT device network configuration from the OT device (102); and
store the new security artifact in the configuration storage;
and optionally at least one of:
the configuration memory stores computer-executable instructions that, when executed, cause the configuration processor to: determine whether the security artifact resides in the configuration storage; retrieve, in response to the security artifact not residing in the configuration storage, the security artifact from a network device; and store, in the configuration storage, the security artifact; or
update the OT device network configuration, wherein updating the OT device network configuration comprises: connecting to the OT device (102); receiving update user credentials having an access privilege; logging into the OT device (102) using the update user credentials; retrieving, in response to the access privilege having permission to update the OT device (102), a new security artifact from the configuration storage; transmitting, to the OT device (102), the new security artifact; in response receiving, from the OT device (102), acceptance of the new security artifact, logging out of the OT device (102); and in response to receiving, from the OT device (102), a validation success, reporting the validation success; or.
connect to the OT device (102); receive, from the OT device (102), one or more network settings; generate a new security artifact based on the network settings; and store the new security artifact in the configuration storage.
